# EUROPÄISCHE PATENTSCHRIFT

(11) **EP 0 603 633 B1**
(45) Veröffentlichungstag und Bekanntmachung des Hinweises auf die Patenterteilung: **09.04.1997**
(21) Anmeldenummer: 93119714.9
(22) Anmeldetag: 07.12.1993
(51) Int. Cl.: E04D 5/10, D04H 13/00, B32B 5/06, B32B 15/14, B32B 27/04, B32B 27/28

(54) **Dreikomponenten-Schichtstoff**
Three-component laminate
Stratifié de trois composants

(30) Priorität: 15.12.1992 DE 9217045 U
(43) Veröffentlichungstag der Anmeldung: 29.06.1994
(73) Patentinhaber: HOECHST AKTIENGESELLSCHAFT, 65929 Frankfurt am Main (DE)
(72) Erfinder: Weiter, Bertrand Claude, D-86399 Bobingen (DE); Rogg, Markus, D-86399 Bobingen (DE)

(56) Entgegenhaltungen:
- EP-A- 0 006 189
- EP-A- 0 110 039
- EP-A- 0 269 989
- EP-A- 0 347 795
- EP-A- 0 400 711
- EP-A- 0 497 338
- DE-A- 2 827 136
- DE-A- 3 901 152
- DE-A- 3 940 713
- DE-A- 3 941 189
- GB-A- 1 496 197

## Beschreibung

Die vorliegende Erfindung betrifft einen flammhemmenden Schichtstoff aus mindestens einer Vliesschicht, einer Gelegeschicht und einer Metallfolie, der insbesondere als Einlage für Polymer- und Bitumenbahnen dient.

Aus der GB-PS-1 517 595 ist ein ähnliches Material bekannt, bei dem ein Gelege aus Glasfasern in einen Vliesstoff aus organischen Fasern eingearbeitet und anschließend das so erhaltene Gebilde durch Auftrag eines Acrylatbinders verfestigt wird. Auch aus dem EP-B-110 039 ist ein Schichtstoff mit mindestens 3 Schichten bekannt, der aus Vlies- und Gelegeschichten aufgebaut ist. In einer Ausführungsform enthält dieser bekannte Schichtstoff zwei Vliesschichten aus organischen Fasern, zwischen denen ein Gelege aus Mineralfasern, z.B. Glasfasern, eingeschlossen ist. Bei diesem bekannten Material erfolgt die Bindung zwischen den Vliesschichten und dem Gelege durch einen Schmelzkleber.
Aus dem deutschen Gebrauchsmuster G-74 24 706 ist ein Filterstoff bekannt, der aus einem Vlies besteht auf das ein Gewebe oder Gelege so aufgenadelt wird, daß auf der dem Vliesstoff abgewandten Seite des Gewebes oder Geleges ein Faserflor entsteht.

Die aus den genannten Druckschriften GB-PS-1 517 595 und EP-B-110 039 bekannten Materialien werden zur Herstellung von Bitumen-Dachbahnen empfohlen. Allerdings zeigen sie bei diesem Einsatz den gravierenden Mangel, daß sie bei thermischer Belastung zur Bildung von Welligkeit und Rissen neigen. Dieser Mangel kann bereits bei der Imprägnierung der bekannten Schichtstoffe mit heißem Bitumen zu Produktionsschwierigkeiten führen, er kann aber auch beim Heiß-Verlegen der Bitumenbahnen auf dem Dach oder später bei wechselnder Sonneneinstrahlung zu Undichtigkeiten der hergestellten Dachhaut führen.

Diese Schwierigkeiten werden in der DE-A-39 41 189 angesprochen und es wird dort ausgeführt, daß diese Mängel der bekannten Materialien auf den sehr unterschiedlichen Reaktionen (z.B. Dehnbarkeit, Moduländerungen, Schrumpfung) der im Vlies und in der Verstärkung eingesetzten Fasermaterialien (Polyesterfasern im Vlies und Glasfasern in der Verstärkung) bei mechanischer und/oder thermischer Belastung zurückzuführen sind. Es wird daher in dieser Druckschrift vorgeschlagen, zur Beseitigung der genannten Mängel der bekannten, aus Vliesstoffen und Gelegen bestehenden Materialien, Vliesstoffe zur Verstärkung nicht mit Gelegen sondern mit einzelnen Verstärkungsfäden zu versehen, die im Abstand voneinander parallel in den Vliesstoff inkorporiert sind. Die Bindung dieser Gebilde erfolgt durch chemische Bindemittel, durch Nadeln und/oder durch Thermobindung.

Neben den Grundvoraussetzungen einer guten Verarbeitbarkeit beim Bituminieren und beim Verlegen der fertigen Dachbahn und einer guten Langzeitstabilität der Dacheindeckung wird immer wieder die Forderung nach flammfesten Dachbahnen erhoben.
Es ist bekannt, daß Träger für Dachbahnen mit recht guten flammhemmenden Eigenschaften erhalten werden können durch Kombination von Metallfolien mit Vliesstoffen, wie sie z.B. in der DE-A-28 27 136, der DE-A-38 21 011 oder dem DE-GM 9101083 beschrieben sind. Es besteht jedoch häufig der Wunsch die flammhemmenden Eigenschaften weiter zu verbessern und mit besonders guter Dimensionsstabilität zu kombinieren.

Eine Aufgabe der vorliegenden Erfindung ist daher die Bereitstellung von flammhemmenden Schichtstoffen, die zur Herstellung von flammhemmenden Polymer- und Bitumenbahnen mit hoher Stabilität gegen mechanische Beanspruchung eingesetzt werden können.

Ein Gegenstand der vorliegenden Erfindung ist ein flammhemmender Schichtstoff aus mindestens einer Schicht eines verfestigten Spinnvlieses, bevorzugt aus zwei Schichten von verfestigten Spinnvliesen, einer ggf. verfestigten Gelegeschicht aus Glasfasern und einer Metallfolie, wobei das Gelege eine Fadendichte von mehr als 0,5 Fäden/cm, vorzugsweise 0,5 bis 5 Fäden/cm aufweist und Spinnvliese, Gelege und Metallfolie durch eine Nadelung von etwa 20 - 70 Stichen/cm², vorzugsweise von 20 - 50 Stichen/cm² miteinander verbunden sind.

Die Vliesschichten und, sofern das Gelege nicht nur aus Scharen paralleler Glasfäden besteht, gegebenenfalls auch die Gelegeschicht sind verfestigt, d.h. die Filamente dieser flächenförmigen Materialien sind an ihren Kreuzungspunktenaneinander fixiert. Die Verfestigung kann entweder jeweils nur innerhalb einer Schicht wirksam sein, sodaß zwischen den sich berührenden Filamenten von Vliesstoffen und Glasfaser-Gelege keine Bindung besteht, oder sie kann schichtübergreifend wirken, d.h. daß in diesem Fall auch eine Bindung zwischen Filamenten des Vliesstoffs und des Glasgeleges vorhanden ist.

Die separate Verfestigung der Vliesschichten kann entweder mechanisch, z.B. durch Nadeln oder hydrodynamisch, d.h. durch Fluidstrahlen, z.B. Wasserstrahlen, die unter erhöhtem Druck in das Vliesmaterial eingespritzt werden, oder aber durch Sättigen der Schichten mit üblichen Bindern erfolgen, wobei ein Verkleben der Filament-Kreuzungspunkte eintritt.

Als Binder können die erfindungsgemäßen Schichtstoffe z.B. die üblichen Polymeren, die in Form von Dispersionen appliziert werden, enthalten. Zweckmäßigerweise sind dies Dispersionen von Polyvinylalkohol (PVA) oder Butadien-Styrol-Copolymerisaten. Bevorzugt sind jedoch flammfeste Binder, wie sie z.B. in der DE-A-39 01 152 beschrieben sind.
Vorzugsweise erfolgt die Verfestigung durch Schmelzbinder.
Als Schmelzbinder kommen insbesondere modifizierte Polyester mit einem gegnüber dem Vliestoff-Rohstoff um 10 - 50°C, vorzugsweise um 30 - 50°C abgesenkten Schmelzpunkt in Betracht. Beispiele für ein derartiges Bindemittel sind Polybutylenterephthalat oder durch Einkondensieren längerkettiger Diole und/oder von Isophthalsäure oder aliphatischen Dicarbonsäuren modifiziertes Polyethylenterephthalat, insbesondere aber ein durch Einbau von Kettengliedern der unten angegebenen Formel I modifiziertes Polyethylenterephthalat.
Die Schmelzbinder werden vorzugsweise in Faserform in die Vliesstoffe eingebracht, wobei sie als separate Bindefasern oder als Komponente einer Bikomponentenfaser vom Seite-an-Seite-Typ oder vom Kern-Mantel-Typ mit dem Binder als Mantel vorliegen können.

Im Falle der separaten Verfestigung der einzelnen Schichten erfolgt die Bindung der Einzelschichten zum erfindungsgemäßen mehrschichtigen Aufbau durch den abschließenden Vernadelungsprozess, durch den die Metallfolie auf dem Fasermaterial fixiert wird. Nach dem Vernadeln kann der Schichtstoff auch noch zusätzlich mit einem Bindemittel, vorzugsweise einem Schmelzbinder, verfestigt werden.

Die Schichten des erfindungsgemäßen Schichtstoff können auch schichtübergreifend verfestigt sein. Auch in diesem Fall kann die Verfestigung der Vliesschichten entweder mechanisch, z.B. durch Nadeln oder hydrodynamisch, mit üblichen Bindern erfolgen.

Im Unterschied zur separaten Verfestigung erfolgt die Verfestigungsoperation hier nach dem Zusammenführen der Einzelschichten des Schichtstoffs, entweder noch vor oder nach der Auflage der Metallfolie. Als Binder eignen sich auch in diesem Fall die oben für die separate Verfestigung der Einzelschichten genannten Substanzen, und auch hier sind Schmelzbinder bevorzugt. Diese werden, wie bei der separaten Verfestigung der Einzelschichten vorteilhafterweise in Form von Bindefasern in die Vliesstoffe eingebracht und sind hier vorzugsweise in den Vliesstoffschichten angereichert, die den Gelegeschichten zugewandt sind.

Sofern der erfindungsgemäße Schichtstoff nur eine Spinnvlies-Schicht enthält, kann die Metallfolie entweder auf der Seite der Spinnvlies-Schicht oder, vorzugsweise, auf der Seite des Glasgeleges aufgenadelt sein.

Bevorzugt ist jedoch eine Ausführungsform des erfindungsgemäßen Schichtstoff, die zwei Spinnvlies-Schichten enthält wobei die Gelegeschicht zwischen den beiden Spinnvlies-Schichten angeordnet ist.

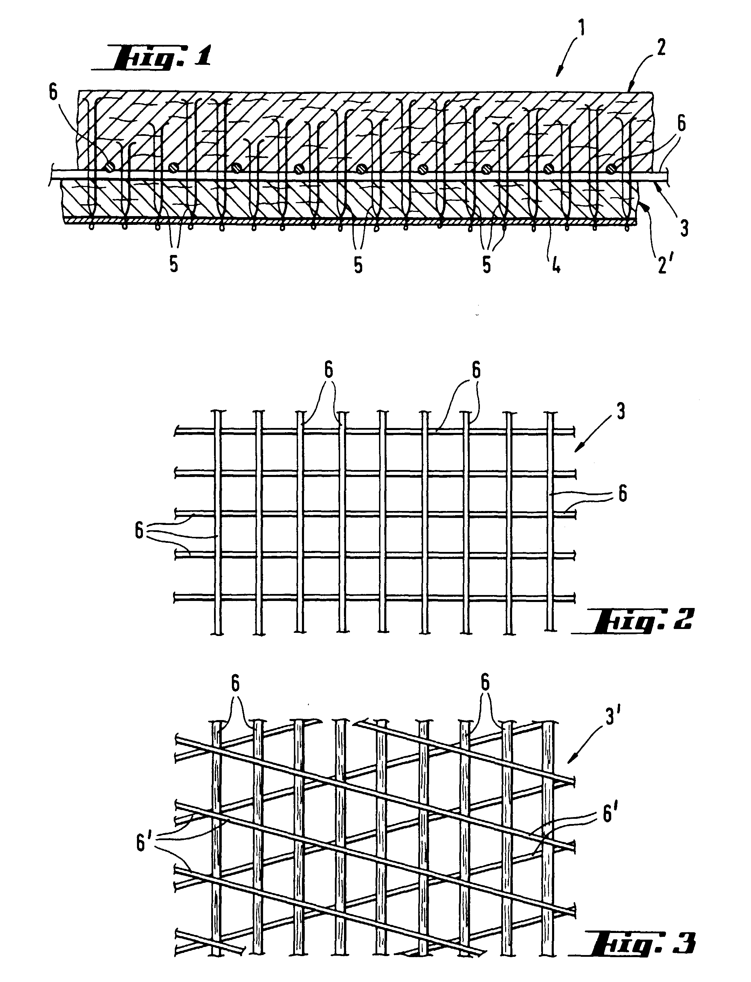

Die Figur 1 zeigt schematisch einen Schnitt durch einen solchen bevorzugten Schichtstoff (1) mit den beiden Vliesschichten (2,2'), der dazwischen liegenden Gelegeschicht (3), der Metallfolie (4), den Filamenten (5), die sich von der äußeren Vliesschicht durch den Schicht-Aufbau hindurch erstrecken und eine feste Verbindung der Schichten bewirken und mit den Glasfäden (6), aus denen die Gelegeschicht (3) besteht.

Das Flächengewicht der erfindungsgemäßen Schichtstoffe beträgt 80 bis 400 g/m², vorzugsweise 100 bis 300 g/m². Davon entfallen auf das Gelege 3 bis 30, vorzugsweise 5 bis 15 g/m² und 10 bis 100 g/m², vorzugsweise 20 bis 60 g/m², auf die Metallfolie.

Die Metallfolie besteht aus einem Metall, daß an der Luft beständig ist, eine gute Wärmeleitfähigkeit hat und dessen Schmelzpunkt über 600°C liegt. Vorzugsweise besteht die Metallfolie aus Aluminium.

Die Spinnvliese sind vorzugsweise sogenannte Spunbonds, die durch eine Wirrablage frisch schmelzgesponnener Filamente erzeugt wurden.

Sie bestehen aus Endlos-Synthesefasern aus schmelzspinnbaren Polymermaterialien. Geeignete Polymermaterialien sind beispielsweise Polyamide, wie z.B. Poly-hexamethylen-diadipamid, Poly-caprolactam, aromatische oder teilaromatische Polyamide ("Aramide"), teilaromatische oder vollaromatischePolyester, Polyphenylensulfid (PPS), Polymere mit Ether- und Keto-gruppen, wie z.B. Polyetherketone (PEK) und Poly-etheretherketon (PEEK), oder Polybenzimidazole.

Bevorzugt bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist. Besonders vorteilhaft sind erfindungsgemäße Schichtstoffbahnen, deren Vliese aus einem Polyestermaterial bestehen, das zu mindestens 85 mol% aus Polyethylenterephthalat besteht. Die restlichen 15 mol% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z.B. von Propandiol oder Butandiol, von Di- oder Tri-ethylenglycol oder, sofern in geringer Menge vorhanden, von Polyglycol mit einem Molgewicht von ca. 500 - 2000. Besonders bevorzugt sind Polyester, die mindesten 95 mol% Polyethylenterephthalat enthalten, insbesondere solche aus unmodifiziertem PET.

Die flammhemmende Wirkung kann noch verstärkt werden durch den Einsatz von Spinnvliesen, die aus flammhemmend modifizierten Polyestern ersponnen wurden. Derartige flammhemmend modifizierten Polyester sind bekannt. Sie enthalten Zusätze von Halogenverbindungen, insbesondere Bromverbindungen, oder, was besonders vorteilhaft ist, sie enthalten Phosphorverbindungen, die in die Polyesterkette einkondensiert sind. Besonders bevorzugte, flammhemmende erfindungsgemäße Schichtstoffe enthalten Spinnvliese aus Polyestern, die in der Kette Baugruppen der Formel 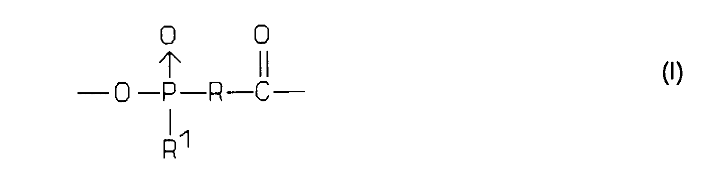 worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten.
Vorzugsweise bedeuten in der Formel I R Ethylen und R¹ Methyl, Ethyl, Phenyl, oder o-, m- oder p-Methyl-phenyl, insbesondere Methyl. Derartige Spinnvliese werden z.B. in der DE-A-39 40 713 beschrieben.

Die in den erfindungsgemäßen Vliesen enthaltenen Polyester haben zweckmäßigerweise ein Molekulargewicht entsprechend einer intrinsischen Viskosität (IV), gemessen in einer Lösung von 1g Polymer in 100 ml Dichloressigsäure bei 25°C, von 0,5 bis 1,4.

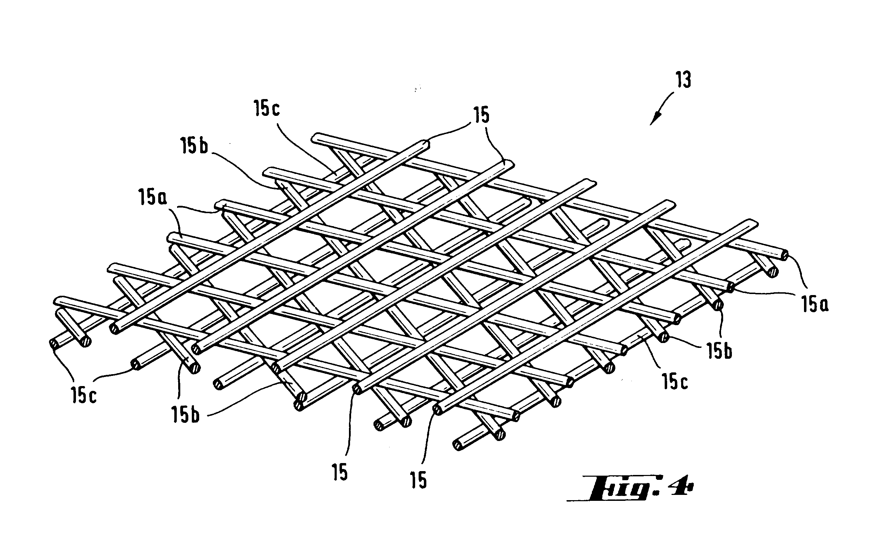

Gelege im Sinne dieser Erfindung sind Schichten aus Glasfäden, die vorzugsweise zumindest zum Teil in Längsrichtung der Bahn ausgerichtet sind, z.B. Fadenscharen, die in Parallellage liegen (ähnlich einer Gewebekette) und die gegebenenfalls durch im Abstand liegende querlaufende Fäden, mit denen sie durch eine gewebeartige Verschlingung oder durch Verklebung an den Kreuzungspunkten fest verbunden sind, in ihrer Parallellage fixiert sind, oder Fadengitter, die aus im Winkel zueinander liegenden Scharen paralleler Garne gebildet werden, wobei die Fäden an ihren Kreuzungspunkten aneinander fixiert sind. Der Winkel, unter dem die Fadenscharen sich kreuzen, liegt in der Regel zwischen 10° und 90°. Ein Gelege kann selbstverständlich mehr als nur zwei Fadenscharen enthalten. Die Anzahl und Richtung der Fadenscharen richtet sich nach eventuellen besonderen Anforderungen. Sehr gut geeignet sind Gelege, die aus zwei im Winkel von vorzugsweise 90° sich kreuzenden Fadenscharen bestehen. Ist eine besonders hohe mechanische Stabilität in einer Richtung, z.B. der Längsrichtung des Schichtstoffs erforderlich, so empfielt sich der Einbau eines Geleges, das in der Längsrichtung eine Fadenschar mit geringerem Fadenabstand aufweist, die z.B. durch eine querverlaufende Fadenschar oder durch zwei Fadenscharen, die mit der ersten Winkel von ca. +40° bis +70° bzw. -40° bis -70° bilden, stabilisiert wird. Die Figuren 2 und 3 zeigen beispielsweise schematisch die Anordnung der Glasfilamentfäden (5) in derartigen Gelegen (3) und (3'). Dabei ist in Figur 2 eine Fadenanordnung gezeigt, bei der sich Scharen etwa gleichtitriger Glasfäden (6) im rechten Winkel kreuzen, während in Figur 3 ein Gelege dargestellt ist, das aus parallelen Scharen dicker Glasfilamentbündel (6) besteht, die durch im größeren Abstand liegende, die Schar der dicken Bündel kreuzende dünnere Haltefäden (6') in ihrer Parallellage fixiert werden. Besondere Stabilitätsanforderungen in allen Richtungen können durch ein Gelege mit 4 oder 5 Fadenscharen, die in verschiedenen Richtungen übereinander liegen und an den Fadenkreuzungspunkten miteinander verbunden sind, erfüllt werden. Ein Beispiel für ein solches spezielles Gelege (13), das drei in verschiedenen Richtungen laufende Fadenscharen (15;15a;15b) und zusätzlich eine mit einer dieser Fadenscharen parallel, aber in einer vierten Ebene laufende Fadenschar (15c) aufweist, ist in schräger Aufsicht in der Figur 4 dargestellt.

Die oben angegeben Fadendichte wird gemessen senkrecht zu der jeweiligen Fadenlaufrichtung. Wie bereits ausgeführt, kann die Fadendichte bei allen vorhandenen Fadenscharen gleich sein oder es können je nach der zu erwartenden Beanspruchung unterschiedliche Fadendichten im Rahmen dieser Grenzwerte gewählt werden.

Die Fixierung der sich kreuzenden Glasfäden an den Kreuzungspunkten kann durch autogenes Verschmelzen bei erhöhter Temperatur und gegebenenfalls unter Anwendung von Druck erfolgen. Die Fixierung kann aber auf jeden Fall durch handelsübliche chemische Bindemittel, wie z.B. Polyvinylalkohol oder Butadien-Styrol-Copolymerisate oder auch durch Schmelzkleber erfolgen. Für flammhemmende, erfindungsgemäße Schichtstoffe kann auch die Fixierung durch ein flammhemmendes Bindemittel, z.B. durch einen Phosphorsäure- oder Phosphonsäuregruppen enthaltende Polyester, der als Schmelzkleber eingesetzt wird, erfolgen. Auch handelsübliche Gelege, die der obigen Beschreibung entsprechen, können selbstverständlich eingesetzt werden.

Als Glasfäden im Sinne dieser Erfindung gelten Multifilamentfäden, die zur Verbesserung des Fadenschlusses einen Schutzdrall aufweisen aber auch ungedrehte Filamentbündel. Sie haben zweckmäßigerweise einen Gesamttiter von 30 bis 130 tex. Ihre feinheitsbezogene Festigkeit beträgt ca. 40 bis 50 cN/tex. In speziellen Fällen, wo eine geringere oder eine besonders hohe mechanische Festigkeit erwünscht sind, kann natürlich auch ein geringerer oder höherer Titer der Verstärkungsgarne angezeigt sein.

Bevorzugt sind erfindungsgemäße Schichtstoffe, deren Spinnvliese aus Polyesterfasern, insbesondere aus Polyethylen-terephthalat und deren Metallfolie aus Aluminium bestehen. Weiterhin ist ein solcher Schichtstoff besonders bevorzugt, wenn er zwei Vliesschichten und eine dazwischen liegende Gelegeschicht aufweist.

Besonders bevorzugt ist auch ein erfindungsgemäßer Schichtstoff, der aus zwei Vliesschichten und einer dazwischen liegenden Gelegeschicht aufgebaut ist, wobei beide Vliesschichten etwa das gleiche Flächengewicht haben. Für spezielle Anforderungen besonders bevorzugt ist ein erfindungsgemäßer Schichtstoff, der aus zwei Vliesschichten und einer dazwischen liegenden Gelegeschicht aufgebaut ist, wobei eine der Vliesschichten mindestens 20% stärker ist als die andere. Bei einer weiteren bevorzugten Ausführungsform der Erfindung ist die Metallfolie zusätzlich mit einem Polyestervlies mit einem Flächengewicht von 10 bis 50 g/m² abgedeckt. Die erfindungsgemäßen Schichtstoffe und das Gelege können zusätzlich zur mechanischen Verfestigung, z.B. zum Vernadeln, noch durch einen chemischen Binder verfestigt sein. Als zusätzliche Binder können die erfindungsgemäßen Schichtstoffe z.B. die üblichen Polymeren, die in Form von Dispersionen appliziert werden, enthalten. Zweckmäßigerweise sind dies Dispersionen von Polyvinylalkohol (PVA) oder Butadien-Styrol-Copolymerisaten. Bevorzugt sind jedoch flammfeste Binder, wie sie z.B. in der DE-A-39 01 152 beschrieben sind. Auch in erfindungsgemäßen Vliesstoffen, die zusätzlich zum Vernadeln durch Binder verfestigt sind, ist der Binder vorzugsweise ein Schmelzbinder.

Als Schmelzbinder kommen insbesondere modifizierte Polyester mit einem gegenüber dem Vliestoff-Rohstoff um 10 - 50°C, vorzugsweise um 30 - 50°C abgesenkten Schmelzpunkt in Betracht. Beispiele für ein derartiges Bindemittel sind Polybutylenterephthalat oder durch Einkondensieren längerkettiger Diole und/oder von Isophthalsäure oder aliphatischen Dicarbonsäuren modifiziertes Polyethylenterephthalat, insbesondere aber ein durch Einbau von Kettengliedern der oben angegebenen Formel I modifiziertes Polyethylenterephthalat.
Die Schmelzbinder werden vorzugsweise in Faserform in die Vliesstoffe eingebracht und sind dann vorzugsweise in den Vliesstoffschichten angereichert, die den Gelegeschichten zugewandt sind.

Besonders bevorzugt sind auch solche erfindungsgemäßen filamentverstärkten Vliesstoffbahnen, die eine Kombination von bevorzugten Merkmalen aufweisen.

Die Herstellung der erfindungsgemäßen Schichtstoffe erfolgt durch Ablage des die Vliesschichten bildenden Fasermaterials auf einer bewegten Ablagefläche. Für die Ablage der Endlosfasern werden zweckmäßigerweise Spinnbalken eingesetzt, aus denen ein Faservorhang in einen Spinn-und Streckschacht eingesponnen wird, in dem die Fasern durch einen Fluidstrom gleichzeitig abgekühlt und beschleunigt und damit verstreckt werden. Auf das so hergestellte Spinnvlies werden die Glasgarne bzw.-Gelege aufgelegt und, wie weiter unten beschrieben, gemeinsam verfestigt. Soll das Glasgelege zwischen zwei Vliesschichten eingeschlossen werden, so erfolgt das Einbringen der Glasgelege zweckmäßigerweise von einem Lieferorgan, von dem aus die Glasgarne bzw. -Gelege zwischen zwei Vlies-Schichten einlaufen, die von zwei in Transportrichtung hintereinander liegenden Reihen von Ablageorganen auf derselben Ablage abgelegt werden. Anschließend wird die Schichtkonstruktion verfestigt. Schließlich wird auf die Schichten aus Fasermaterial die Metallfolie aufgelegt und alle Schichten miteinander mit etwa 20-70 Stichen/cm² vernadelt.

Selbstverständlich ist es auch möglich, erfindungsgemäße Schichtstoffe durch Vereinigung der vorgefertigten und verfestigten Vlies- und Gelegeschichten und der Metallfolie auf Assembliermaschinen und anschließendes Vernadeln zu erzeugen.

Die Auswahl der für die Herstellung der erfindungsgemäßen filamentverstärkten Vliesstoffe eingesetzten Gelege erfolgt nach den oben angegebenen Kriterien.

Die Verfestigung der Fasermaterial-Schichten erfolgt in an sich bekannter Weise entweder durch Aufbringen, z.B. Aufsprühen von Bindemittel-Lösungen oder - Dispersionen und Abdampfen des Lösungs- oder Dispergiermittels oder aber, vorzugsweise, durch das Einbringen von Schmelzbindern und anschließende Wärmebehandlung bei einer Temperatur, bei der der Schmelzbinder schmilzt und die tragenden Filamente des Vliesstoffes an deren Kreuzungspunkten verbindet. Der Schmelzbinder wird mit besonderem Vorteil in Form von Bindefilamenten in das Vlies eingebracht. Diese können als separate Filamente vorliegen, wenn sie z. B. aus separaten Öffnungen der Spinnbalken ausgesponnen und im ablaufenden Faservorhang gleichmäßig verteilt werden, oder sie können als Mantel oder Seite der tragenden Filamente oder eines Teils der tragenden Filamente vorliegen wenn entsprechende Düsenöffnungen für das Erspinnen von Kern-Mantel-Filamenten oder Seite-an-Seite Zweikomponentenfilamenten im Spinnbalken vorgesehen werden.

Nach der Vereinigung der Spinnvliesschicht oder -Schichten mit der Glasgelegeschicht und der Verfestigung wird auf das Ensemble die Metallfolie aufgelegt.

Die Verfestigung des gesamten Schichtstoffes erfolgt durch Vernadeln der abgelegten Vlies- und Gelegeschichten und der Metallfolie mit der oben angegebenen Stichzahl. Gewünschtenfalls kann auch nach dem Vernadeln noch eine abschließende, zusätzliche Verfestigung in an sich bekannter Weise durch Bindemittel, wie oben beschrieben, vorgenommen werden.

Die erfindungsgemäßen flammhemmenden Schichtstoffbahnen zeigen keine Delaminierungsneigung, und keine Bildung von Wellen und Rissen, selbst nicht unter hoherthermisch-mechanischer Belastung. Die erfindungsgemäßen Schichtstoffbahnen zeigen neben den hervorragenden flammhemmenden Eigenschaften beim Bituminieren einen überraschend geringen Breiteneinsprung, der bei einer etwa 1000 mm breiten Bahn in der Regel nur 0 bis 4 mm beträgt, im Vergleich zu etwa 12 mm bei herkömmlichen Bahnen. Ferner zeigt sich, daß man mit dem erfindungsgemäßen Schichtstoff auch bei ungünstigen Bituminierungsbedingungen ebene, flächenstabile, blasenfreie Bitumenbahnen erhält. Dadurch ergibt sich eine erheblich verbesserte Verarbeitbarkeit und eine erhöhte Arbeitssicherheit, z.B. beim Verlegen einer bituminierten Dachbahn auf dem Dach.

Die gute Flammhemmung bei gleichzeitig sehr guter Dimensionsstabilität ergibt sich überraschenderweise durch die kombination der Vliesschichten mit dem Gelege und der Metallfolie. Die Glasgelegeschicht wird durch die beiden Polyester-Spinnvliesschichten abgedeckt. Dies erweist sich beim Vernadeln des Schichtstoffes und bei der Bituminierung als sehr vorteilhaft.

Ein weiterer Gegenstand der vorliegenden Erfindung ist eine Polymer- oder Bitumenbahn, insbesondere eine bituminierte Dachbahn und eine bituminierte Dachunterspannbahn, die als Träger eine erfindungsgemäße gelegeverstärkte Schichtstoffbahn enthält. Polymerbahnen im Sinne dieser Erfindung sind z.B. Kunststoff-oder Kautschukbahnen; Bitumenbahnen im Sinne dieser Erfindung sind mit Bitumen oder Polymerbitumen imprägnierte Bahnen, insbesondere bituminierten Dachbahnen oder Dachunterspannbahnen. Diese Polymer- oder Bitumenbahnen werden hergestellt durch Tränken und/oder Beschichten der erfindungsgemäßen Verstärkungsbahnen mit den angegebenen geschmolzenen Polymermassen, insbesondere geschmolzenem Bitumen, in an sich bekannter Weise.

## Patentansprüche

1. Flammhemmender Schichtstoff aus mindestens einer Schicht eines verfestigten Spinnvlieses, einer Gelegeschicht aus Glasfasern und einer Metallfolie, wobei das Gelege eine Fadendichte von mehr als 0,5 Fäden/cm, vorzugsweise 0,5 bis 5 Fäden/cm aufweist und Spinnvliese, Gelege und Metallfolie durch eine Nadelung von 20 - 70 Stichen/cm², vorzugsweise von 20 - 50 Stichen/cm² miteinander verbunden sind.

2. Schichtstoff gemäß Anspruch 1, dadurch gekennzeichnet, daß er aus zwei Schichten von verfestigten Spinnvliesen einer Gelegeschicht aus Glasfasern und einer Metallfolie besteht, wobei die Gelegeschicht zwischen den beiden Spinnvlies-Schichten angeordnet ist.

3. Schichtstoff gemäß mindestens einem der Ansprüche 1 und 2, dadurch gekennzeichnet, daß die Spinnvliese aus Polyesterfasern, insbesondere aus Polyethylen-terephthalat und das Gelege aus Glasfäden bestehen.

4. Schichtstoff nach mindestens einem der Ansprüche 1 bis 3, dadurch gekennzeichnet, daß der Schichtstoff durch einen Binder verfestigt ist.

5. Schichtstoff nach Anspruch 4, dadurch gekennzeichnet, daß der Binder ein Schmelzbinder ist.

6. Schichtstoff nach Anspruch 4, dadurch gekennzeichnet, daß der Binder flammhemmend ist.

7. Schichtstoff nach Anspruch 4, dadurch gekennzeichnet, daß er den Schmelzbinder in Faserform enthält.

8. Schichtstoff gemäß mindestens einem der Ansprüche 1 bis 7, dadurch gekennzeichnet, daß die Spinnvliese aus Polyesterfasern bestehen, die in der Kette Baugruppen der Formel 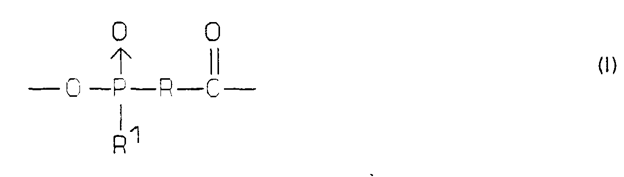 worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten.

9. Verfahren zur Herstellung des Schichtstoffs des Anspruchs 1, dadurch gekennzeichnet, daß eine erste Spinnvliesschicht ersponnen wird, dann eine Gelegeschicht aus Glasfasern aufgebracht wird, danach eine zweite Spinnvliesschicht auf diese Kombination aufgesponnen wird, anschließend der erhaltene Schichtaufbau verfestigt, mit einer Metallfolie belegt und abschließend mit 20 - 70 Stichen/cm² vernadelt wird.

10. Verfahren zur Herstellung des Schichtstoffs des Anspruchs 1, dadurch gekennzeichnet, daß vorgefertigte und verfestigte Vlies- und Glasfaser-Gelegeschichten und die Metallfolie auf Assembliermaschinen vereinigt und anschließend der erhaltene Schichtaufbau mit 20 - 70 Stichen/cm² vernadelt wird.

11. Verfahren nach mindestens einem der Ansprüche 9 und 10, dadurch gekennzeichnet, daß der Schichtstoff nach dem Vernadeln noch zusätzlich durch einen Binder verfestigt wird.

12. Verwendung eines Schichtstoffes des Anspruchs 1 zur Herstellung von Polymer-und Bitumenbahnen, insbesondere von Dachbahnen und Dachunterspannbahnen.

## Claims

1. A flame-retardant laminate comprising at least one layer of a strengthened spun nonwoven, a lay-up layer of glass fibers and a metal foil, wherein the lay-up has a thread density of more than 0.5 threads/cm, preferably from 0.5 to 5 threads/cm, and spun nonwovens, lay-up and metal foil are joined to one another by a needling of 20-70 piercings/cm², preferably 20-50 piercings/cm².

2. A laminate as claimed in claim 1, which comprises two layers of strengthened spun nonwovens, a lay-up layer of glass fibers and a metal foil, where the lay-up layer is arranged between the two spun nonwoven layers.

3. A laminate as claimed in one or both of claims 1 and 2, wherein the spun nonwovens comprise polyester fibers, in particular polyethylene terephthalate fibers, and the lay-up comprises glass threads.

4. A laminate as claimed in one or more of claims 1 to 3, wherein the laminate is strengthened by a binder.

5. A laminate as claimed in claim 4, wherein the binder is a melt biender.

6. A laminate as claimed in claim 4, wherein the binder is flame-retardant.

7. A laminate as claimed in claim 4, wherein the melt binder is present in fiber form.

8. A laminate as claimed in one or more of claims 1 to 7, wherein the spun nonwovens comprise polyester fibers whose chain comprises condensed structural units of the formula 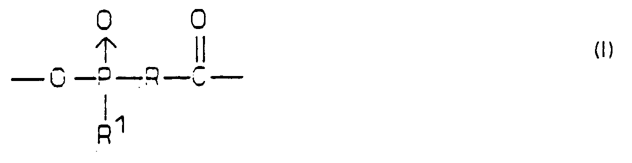 where R is alkylene or polymethylene having from 2 to 6 carbon atoms or phenyl and R¹ is alkyl having from 1 to 6 carbon atoms, aryl or aralkyl.

9. A process for producing the laminate as claimed in claim 1, which comprises spinning a first spun nonwoven layer, then applying a lay-up layer of glass fibers, then spinning a second spun nonwoven layer onto this combination, subsequently strengthening the sheet structure obtained, covering it with a metal foil and finally needling it with 20-70 piercings/cm².

10. A process for producing the laminate as claimed in claim 1, which comprises combining prefabricated and strengthened nonwoven and glass fiber lay-up layers and the metal foil on assembling machines and finally needling the sheet structure obtained with 20-70 piercings/cm².

11. The process as claimed in one or both of claims 9 and 10, wherein the laminate after needling is additionally strengthened by means of a binder.

12. Use of a laminate as claimed in claim 1 for producing polymer and bitumen sheets, in particular roofing sheets and under-roof sheets.

## Revendications

1. Stratifié retardateur de flamme, constitué d'au moins une couche d'une nappe de fibres consolidée, d'une couche de grille de fibres de verre et d'une feuille métallique, la grille ayant un compte de fils supérieur à 0,5 fil/cm, de préférence de 0,5 à 5 fils/cm, et les nappes de fibres, la grille et la feuille métallique sont assemblées les unes aux autres par un aiguilletage à raison de 20 à 70 points/cm², de préférence de 20 à 50 points/cm².

2. Stratifié selon la revendication 1, caractérisé en ce qu'il est constitué de deux couches de nappes de fibres consolidées, d'une couche de grille de fibres de verre et d'une feuille métallique, où la couche de grille est disposée entre les deux couches de nappes de fibres.

3. Stratifié selon au moins l'une des revendications 1 et 2, caractérisé en ce que les nappes de fibres sont constituées de fibres de polyester, en particulier de poly(téréphtalate d'éthylène), et la grille est constituée de fils de verre.

4. Stratifié selon au moins l'une des revendications 1 à 3, caractérisé en ce que le stratifié est consolidé par un liant.

5. Stratifié selon la revendication 4, caractérisé en ce que le liant est un liant fusible.

6. Stratifié selon la revendication 4, caractérisé en ce que le liant est retardateur de flamme.

7. Stratifié selon la revendication 4, caractérisé en ce qu'il contient le liant fusible sous forme de fibres.

8. Stratifié selon au moins l'une des revendications 1 à 7, caractérisé en ce que les nappes de fibres sont constituées de fibres de polyester, qui contiennent dans leur chaîne, incorporés par condensation, des motifs de formule 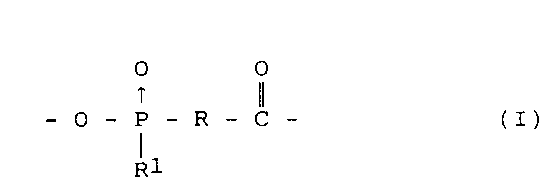 dans laquelle R est un radical alkylène ou polyméthylène ayant de 2 à 6 atomes de carbone ou phényle, et R¹ est un radical alkyle ayant de 1 à 6 atomes de carbone, aryle ou aralkyle.

9. Procédé de fabrication du stratifié selon la revendication 1, caractérisé en ce qu'on file une première couche de nappe de fibres, puis on applique une couche de grilles constituée de fibres de verre, puis on applique par filage sur cette combinaison une deuxième couche de nappe de fibres, puis la structure stratifiée obtenue est consolidée, garnie d'une feuille métallique et finalement aiguilletée à raison de 20 à 70 points/cm².

10. Procédé de fabrication du stratifié selon la revendication 1, caractérisé en ce que les couches de non-tissés et de grilles de fibres de verre, consolidées et préfabriquées, ainsi que la feuille métallique, sont réunies sur des machines à assembler, puis la structure stratifiée obtenue est aiguilletée à raison de 20 à 70 points/cm².

11. Procédé selon au moins l'une des revendications 9 et 10, caractérisé en ce que le stratifié, après l'aiguilletage, est encore consolidé par un liant.

12. Utilisation d'un stratifié selon la revendication 1 pour fabriquer des bandes de polymère et de bitume, en particulier des bandes de toit et des bandes pour la face inférieure de toits.
